(19) Europäisches Patentamt
European Patent Office
Office européen des brevets

(11) **EP 4 318 334 A1**

(12) **EUROPEAN PATENT APPLICATION**
published in accordance with Art. 153(4) EPC

(43) Date of publication:
**07.02.2024 Bulletin 2024/06**

(21) Application number: **21934956.0**

(22) Date of filing: **31.03.2021**

(51) International Patent Classification (IPC):
***G06N 20/00*** *(2019.01)*

(52) Cooperative Patent Classification (CPC):
**G06N 20/00**

(86) International application number:
**PCT/JP2021/013982**

(87) International publication number:
**WO 2022/208791 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Aising Ltd.**
**Tokyo 107-0052 (JP)**

(72) Inventors:
• **IDESAWA Junichi**
**Tokyo 107-0052 (JP)**
• **SUGAWARA Shimon**
**Tokyo 107-0052 (JP)**

(74) Representative: **Kilian Kilian & Partner mbB**
**Zielstattstraße 23a**
**81379 München (DE)**

(54) **INFORMATION PROCESSING DEVICE, METHOD, AND PROGRAM**

(57) Provided is an information processing device for generating tree structure model data to be used for machine learning based on data for generating a tree structure model including one or more pieces of input sequence data, including a statistic identifying unit that identifies a statistic for each piece of the input sequence data; and a tree-structure-model-data generation unit that sets a splitting value for each node of a tree structure model based on the statistic, thereby generating tree structure model data.

FIG. 3

EP 4 318 334 A1

## Description

Technical Field

The present invention relates to an information processing device and the like for performing machine learning, in particular, machine learning that uses a tree structure model, for example.

Background Art

Conventionally, a machine learning method that uses various tree structure models, such as a decision tree, is known.

By the way, in a learning process of such a type that uses the conventional tree structure model, a splitting value, which serves as a branch condition, is determined for each node of the tree structure model based on data that has been assigned to the node through branching.

For example, in a decision tree described in Patent Literature 1, an information gain is calculated based on data assigned to each node, and a branch condition is determined to make the information gain maximum.

Citation List

Patent Literature

Patent Literature 1: Japanese Patent No. 6708847

Summary of Invention

Technical Problem

However, if a splitting value, which serves as a branch condition, is set on each node of a tree structure model based on data that has been assigned to the node through branching performed so far, the possible range of the splitting value, which serves as the branch condition for each node, is limited as it depends on the assigned data. Thus, the diversity of the branch condition may be lost.

If the diversity of the branch condition is lost, it may be impossible for an algorithm, which performs additional learning using the generated tree structure model, for example, to sufficiently deal with the branching of data that is obtained additionally. Such a situation becomes particularly serious when sufficient data is not available at a time point of generation of a tree structure model or when the properties of the additionally obtained data change due to concept drift or the like, for example.

The present invention has been made based on the foregoing technical background, and it is an object of the present invention to generate tree structure model data with a diverse splitting value, which serves as a branch condition for each node of a tree structure model, by determining the splitting value without dependence on data assigned to each node.

Solution to Problem

The foregoing technical problems can be solved by an information processing device and the like with the following configurations.

That is, an information processing device according to the present invention is an information processing device for generating tree structure model data to be used for machine learning based on data for generating a tree structure model including one or more pieces of input sequence data, including a statistic identifying unit that identifies a statistic for each piece of the input sequence data; and a tree-structure-model-data generation unit that sets a splitting value for each node of a tree structure model based on the statistic, thereby generating tree structure model data.

According to such a configuration, since the splitting value for each node of the tree structure model is set based on the statistic of each piece of the input sequence data without dependence on data assigned to each node, it is possible to generate tree structure model data with diverse splitting values. It should be noted that the statistic can be identified using various methods. For example, the statistic may be identified by generating a statistic based on each piece of the input sequence data, or identified by reading or referring to a statistic stored in advance for each piece of the input sequence data.

The statistic may be a basic statistic.

According to such a configuration, the splitting value can be set based on the basic feature of data.

The statistic may include a maximum value and a minimum value of a numerical value included in each piece of the input sequence data.

According to such a configuration, the splitting value for each node can be appropriately set using the maximum value and the minimum value included in each piece of the input sequence data.

The tree-structure-model-data generation unit may randomly set a splitting value for each node in a range of the maximum value to the minimum value.

According to such a configuration, the splitting value for each node can be appropriately set in the range of the maximum value to the minimum value included in each piece of the input sequence data.

The statistic may include a mean value and a standard deviation of a numerical value included in each piece of the input sequence data.

According to such a configuration, the splitting value for each node can be appropriately set using the mean value and the standard deviation included in each piece of the input sequence data.

The tree-structure-model-data generation unit may randomly set a splitting value for each node in accordance with a standard normal distribution based on the mean value and the standard deviation.

According to such a configuration, the splitting value for each node can be appropriately set in accordance with the standard normal distribution.

The tree-structure-model-data generation unit may set the splitting value by taking into consideration a splitting value of an upper node.

According to such a configuration, since the splitting value is determined by taking into consideration the splitting value of the upper node, efficient branching can be achieved.

The statistic identifying unit may include a per-unit input data acquisition unit that acquires the input sequence data per predetermined unit, and a statistic update unit that updates the statistic based on the predetermined unit of the acquired input sequence data.

According to such a configuration, since the input sequence data is acquired per predetermined unit, and the statistic is updated based thereon, it is possible to generate tree structure model data without loading the input sequence data into a memory.

The tree-structure-model-data generation unit may generate a plurality of pieces of tree structure model data.

According to such a configuration, various tree structure model data to be used for machine learning can be generated.

The present invention can also be conceptualized as a learning processing device. That is, a learning processing device according to the present invention is a learning processing device that uses the tree structure model data generated by the foregoing information processing device, including a learning data acquisition unit that acquires learning data, the learning data including one or more pieces of input data and one or more pieces of correct answer data; an inference output data generation unit that generates inference output data based on each piece of the input data, the tree structure model data, and a parameter associated with the tree structure model data; an update amount generation unit that generates an update amount based on the inference output data and each piece of the correct answer data; and a parameter update processing unit that updates the parameter based on the update amount.

According to such a configuration, since learning is sequentially performed using a tree structure model with a diverse splitting value that serves as a branch condition for each node, it is possible to increase the potential for appropriately branching the learning target data that is obtained additionally. Therefore, even when sufficient data is not available at a time point of generation of a tree structure model or when the properties of the additionally obtained data have slightly changed due to concept drift or the like, it is possible to provide a machine learning technology that can address such issues.

The inference output data generation unit may identify the parameter associated with a leaf node of a tree structure model related to the tree structure model data based on each piece of the input data, and generate the inference output data based on the parameter.

According to such a configuration, it is possible to identify the parameter associated with the leaf node of the tree structure model, and generate the inference output data based on the parameter.

The update amount may be generated based on a difference between the inference output data and each piece of the correct answer data.

According to such a configuration, since the update amount is generated based on the difference between the inference output data and the output data provided in advance, it is possible to increase the accuracy of the inference output data.

The data for generating the tree structure model and the learning data may be identical data.

According to such a configuration, since learning can be performed using the data used to generate the tree structure model, it is possible to complete a process up to the learning process using a small volume of data.

The present invention can also be conceptualized as an inference processing device. That is, an inference processing device according to the present invention is an inference processing device that uses the tree structure model data generated by the foregoing information processing device, including an inference input data acquisition unit that acquires one or more pieces of inference input data; and an inference output data generation unit that generates inference output data based on each piece of the inference input data, the tree structure model data, and a parameter associated with the tree structure model data.

According to such a configuration, an inference process can be implemented based on the generated tree structure model.

The present invention can also be conceptualized as an information processing method. That is, an information processing method according to the present invention is an information processing method for generating tree structure model data to be used for machine learning based on data for generating a tree structure model including one or more pieces of input sequence data, including a statistic identifying step of identifying a statistic for each piece of the input sequence data; and a tree-structure-model-data generation step of setting a splitting value for each node of a tree structure model based on the statistic, thereby generating tree structure model data.

The present invention can also be conceptualized as an information processing program. That is, an information processing program according to the present invention is an information processing program for generating tree structure model data to be used for machine learning based on data for generating a tree structure model including one or more pieces of input sequence data, including a statistic identifying step of identifying a statistic for each piece of the input sequence data; and a tree-structure-model-data generation step of setting a splitting value for each node of a tree structure model based on the statistic, thereby generating tree structure model data.

The present invention can also be conceptualized as a micro controller unit. That is, a micro controller unit according to the present invention is a micro controller unit for generating tree structure model data to be used for machine learning based on data for generating a tree structure model including one or more pieces of input sequence data, including a statistic identifying unit that identifies a statistic for each piece of the input sequence data; and a tree-structure-model-data generation unit that sets a splitting value for each node of a tree structure model based on the statistic, thereby generating tree structure model data.

Advantageous Effects of Invention

According to the present invention, it is possible to generate tree structure model data with a diverse splitting value, which serves as a branch condition for each node of a tree structure model, by determining the splitting value without dependence on data assigned to each node.

Brief Description of Drawings

[Figure 1] Figure 1 is a configuration diagram of an information processing device.
[Figure 2] Figure 2 is a functional block diagram of the information processing device.
[Figure 3] Figure 3 is a general flowchart related to a process of generating a tree structure model.
[Figure 4] Figure 4 illustrates an example of data used to generate tree structure data.
[Figure 5] Figure 5 illustrates an example of statistical data.
[Figure 6] Figure 6 is a detailed flowchart of the process of generating a tree structure model.
[Figure 7] Figure 7 is an explanatory view of a depth-first search.
[Figure 8] Figure 8 is a general flowchart related to a learning process.
[Figure 9] Figure 9 is a detailed flowchart of a process of generating an inference value.
[Figure 10] Figure 10 is a detailed flowchart of a process of updating a tree structure model.
[Figure 11] Figure 11 is a conceptual diagram related to the update of each tree structure model.
[Figure 12] Figure 12 is a conceptual diagram of learning performed using a tree structure model.
[Figure 13] Figure 13 is a general flowchart related to an inference process.
[Figure 14] Figure 14 is a general flowchart related to the operation of a micro controller unit.
[Figure 15] Figure 15 is an explanatory view illustrating the concept of the acquisition of data for generating a tree structure model.
[Figure 16] Figure 16 is an explanatory view related to an example of the determination of a splitting value.
[Figure 17] Figure 17 illustrates an example of a table collectively showing mean values and standard deviations.

Description of Embodiments

Hereinafter, an embodiment of the present invention will be described in detail with reference to the accompanying drawings.

(1. First embodiment)

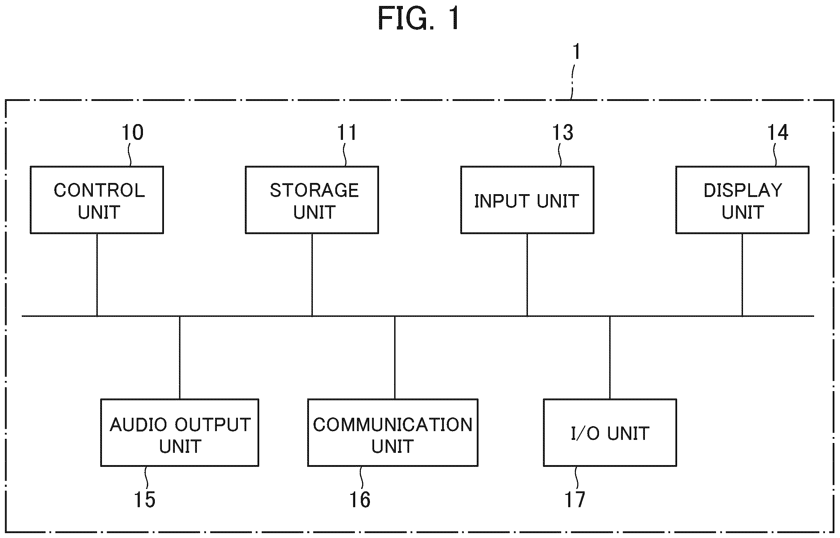

First, a first embodiment of the present invention will be described with reference to Figures 1 to 13. The first embodiment will describe an example in which the present invention is executed on an information processing device 1. Although the information processing device of the present embodiment is an information processing device, such as a PC or a tablet terminal, it is needless to mention that the present invention is also applicable to other devices. Thus, the information processing device may be a MCU (micro controller unit) or a dedicated circuit board, for example.

(1.1 Configuration)

Figure 1 is a configuration diagram of the information processing device 1. As is obvious from Figure 1, the information processing device 1 includes a control unit 10, a storage unit 11, an input unit 13, a display unit 14, an audio output unit 15, a communication unit 16, and an I/O unit 17, which are mutually connected via a bus.

The control unit 10 is an arithmetic unit, such as a CPU or a GPU, and executes programs described below, for example. The storage unit 11 is a memory, such as ROM/RAM, and stores programs and data. The input unit 13 forms an interface with an input device, and receives input signals. The display unit 14 is connected to a display device, and performs a display process.

The audio output unit 15 is connected to a speaker or the like, and performs an audio output process. The communication unit 16 is a communication unit that communicates with other devices by wire or radio. The I/O unit 17 is an interface for connection to an external device, and performs a predetermined input/output process.

It should be noted that Figure 1 merely illustrates an example. Thus, the information processing device 1 may include only some of the components, or may further include other components. For example, the information processing device 1 may be configured to read data from an external storage, or may be configured as a device without the display unit 14, the audio output unit 15, the communication unit 16, and the I/O unit 17 so as to be built into another device.

Similar functions may be implemented using a predetermined circuit or a FPGA (field-programmable gate array).

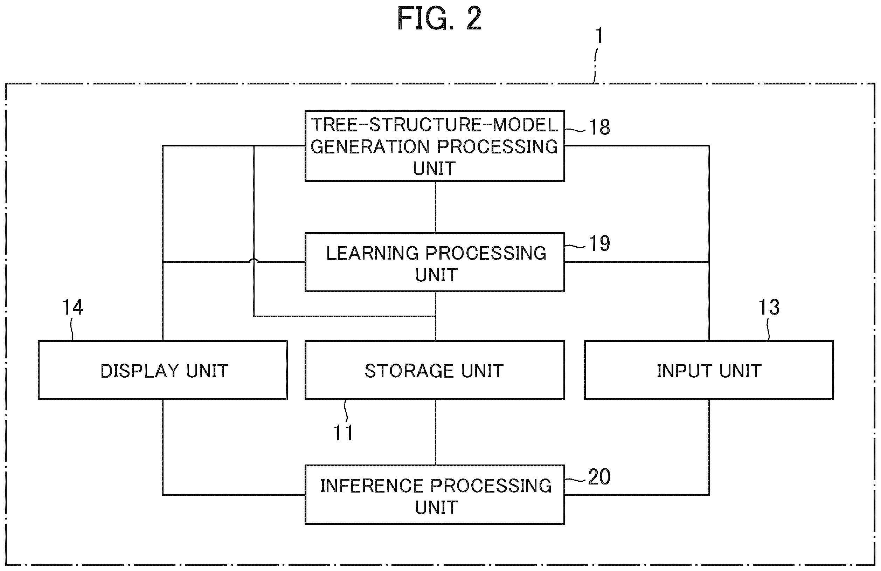

Figure 2 is a functional block diagram of the information processing device 1. As is obvious from Figure 2, the information processing device 1 includes as its functional blocks a tree-structure-model generation processing unit 18 that performs a process of generating a tree structure model described below, a learning processing unit 19 that performs a learning process described below, and an inference processing unit 20 that performs an inference process described below. Such functional blocks are implemented by the control unit 10. Each of the functional blocks is connected to the storage unit 11, the display unit 14, and the input unit 13 so that a storage process, a display process, and an input process are performed as appropriate.

Although Figure 2 illustrates an example in which a process of generating a tree structure model, a learning process, and an inference process are executed with a single device, the present invention is not limited to such a configuration. Thus, some or all of the processes may be executed with separate devices. For example, it is possible to first execute a process of generating a tree structure model with one device, and then execute a learning process and an inference process with the other device.

(1.2 Operation)

Next, an example of the operation executed on the information processing device 1 will be described.

(1.2.1 Process of generating tree structure model)

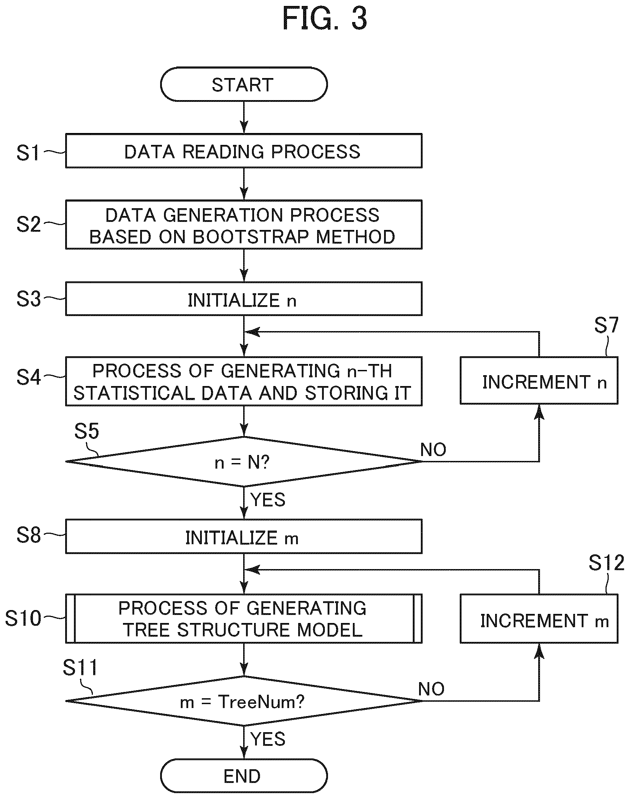

Figure 3 is a general flowchart related to a process of generating a tree structure model executed with the tree-structure-model generation processing unit 18. As is obvious from Figure 3, once the process is started, the information processing device 1 performs a process of reading data to be used for generating tree structure data (S1).

After the data reading process, data to serve as the basis for generating tree structure data is generated using the bootstrap method (S2). Herein, the bootstrap method refers to a method of selecting pieces of data from among given sample population data while allowing overlap, and thus generating a desired number of pieces of new sample population data.

In the present embodiment, the new sample population data obtained using the bootstrap method is composed of one or more pieces of sequence data. The sequence data may be either sequence data of continuous values or sequence data of discontinuous values. The content of the data may be any content, for example, time-series data.

Although the present embodiment has illustrated an example in which data is generated using the bootstrap method, the present invention is not limited to such a configuration. Thus, data may be directly used without the need to generate new data using the bootstrap method.

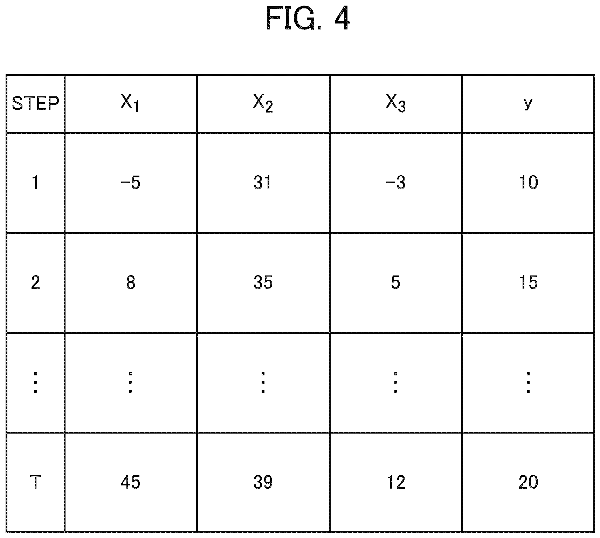

Figure 4 illustrates an example of data used to generate tree structure data. In the example of Figure 4, data obtained using the bootstrap method includes three pieces of input sequence data (X1 to X3) and a single piece of output sequence data (y). Each piece of the sequence data includes T (1 to T) steps. For example, the first input sequence data (X1) has an array of numerical values like -5 (STEP=1), 8 (STEP=2) ..., 45 (STEP=T). Each of the second input sequence data (X2), the third input sequence data (X3), and the output sequence data (y) also has an array of numerical values. It should be noted that the output sequence data (y) is sequence data to be output corresponding to the input sequence data, that is, correct answer data.

It should be noted that the number of pieces of sequence data in Figure 4 is only exemplary. For example, the data used to generate tree structure data may include a single piece of input sequence data and a plurality of pieces of output sequence data.

In addition, as described below, since the output sequence data is not necessary to generate a tree structure model, it is possible to read only the input sequence data (X1 to X3) in the stage of the process of generating a tree structure model.

After the data generation process is performed using the bootstrap method, a process of initializing a variable n, which is to be repeatedly used in the following process, is performed (S3). The initialization process is a process of setting the variable n to 1, for example. Then, a process of generating statistical data for the n-th input sequence data and storing the statistical data is performed (S4). Specifically, a statistical process is performed by reading all pieces (STEP=1 to STEP=T) of the input sequence data (X) so that statistical data is generated.

The statistical data is the basic statistic in the present embodiment, more specifically, the maximum value and the minimum value of the input sequence data. It should be noted that the basic statistic is a value representing the basic features of data, and includes a representative value and dispersion.

The process of generating statistical data for a single piece of input sequence data is repeatedly executed by incrementing the value of n by one until n becomes the maximum value N (for example, N=3 in the example of Figure 4) (S5 NO and S7). When the value of n has become equal to the maximum value N, the flow proceeds to a process of initializing a variable m (S8).

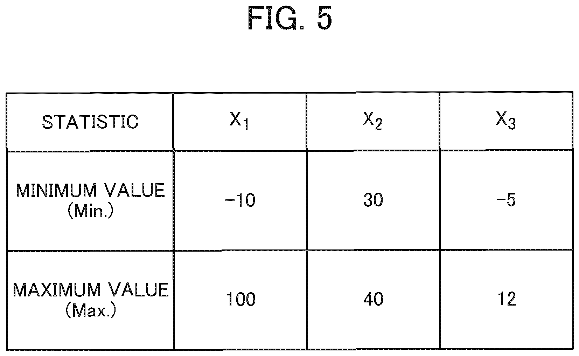

Figure 5 illustrates an example of the statistical data obtained in the present embodiment. As is obvious from Figure 5, the maximum value (Max.) and the minimum value (Min.) are generated as a statistic for each piece of the input sequence data (X1 to X3).

The example of Figure 5 illustrates a minimum value of -10 and a maximum value of 100 for the first input sequence data (X1), a minimum value of 30 and a maximum value of 40 for the second input sequence data (X2), and a minimum value of -5 and a maximum value of 12 for the third input sequence data (X3).

Although the present embodiment has described a configuration in which a statistic is identified by generating a statistic for each piece of the input sequence data, the present invention is not limited to such a configuration. Thus, when a statistic, for example, the maximum value and the minimum value of each piece of the input sequence data are known, it is possible to identify the statistic by reading or referring to the maximum value and the minimum value stored in the storage unit 11 or the like in advance.

Referring back to Figure 3, after the process of initializing the variable m, for example, a process of setting m=1 is performed (S8), a process of generating a tree structure model is performed (S10). Such a process of generating a tree structure model is repeated for the total number (TreeNum) of tree structure models to be generated while incrementing the variable m by one (S11 NO and S12). After the number (TreeNum) of tree structure models is generated (S11 YES), the process terminates.

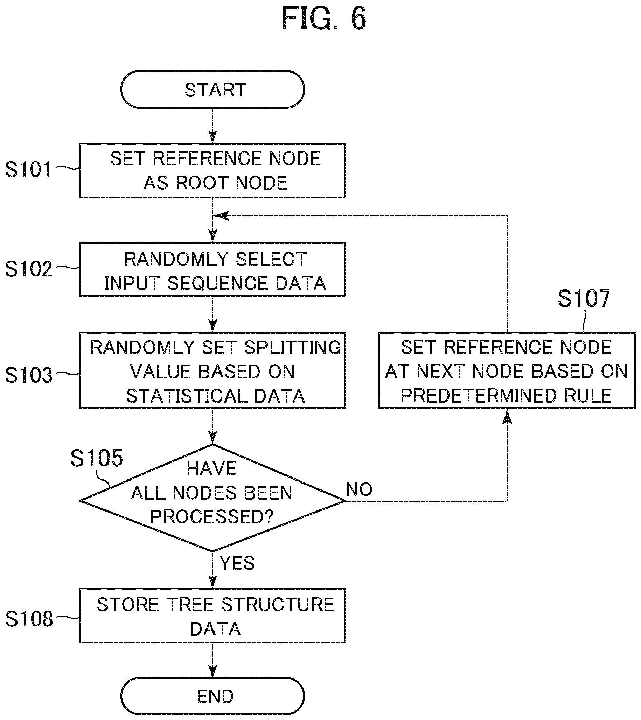

Figure 6 is a detailed flowchart of the process of generating a tree structure model (S10). As is obvious from Figure 6, once the process is started, a process of setting a reference node as the root node is performed (S101). Then, a process of setting a branch condition, that is, a splitting value for each node of the tree structure is performed (S102 to S107). When the splitting value is set, data having a value smaller than the splitting value is assigned to the left child node through branching, and data having a value greater than or equal to the splitting value is assigned to the right child node through branching, for example.

First, input sequence data for setting splitting values is randomly selected (S102). For example, in the present embodiment, one of the pieces of input sequence data (X1 to X3) is selected.

Next, a splitting value is randomly set based on the statistical data of the selected input sequence data (S103). In the present embodiment, a splitting value is randomly set by generating a random number in the range of the minimum value to the maximum value generated as the statistical data (S103).

The process of selecting the input sequence data (S102) and the process of setting the splitting value (S103) are repeated while changing the reference node based on a predetermined rule until such processes are performed on all of the nodes (S105 NO and S107). The predetermined rule herein is a so-called depth-first search in the present embodiment.

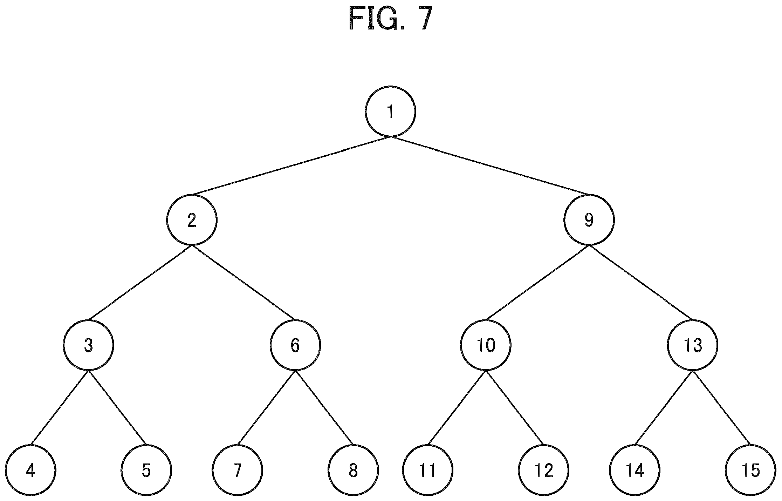

Figure 7 is an explanatory view of a depth-first search. In Figure 7, circles represent nodes. Specifically, the top node is the root node, and the bottom nodes are leaf nodes. Numbers in the nodes represent the order in which the nodes are referred to. As is obvious from Figure 7, the nodes are referred to in the order of 1→2→3→4→...→13→14→15 through a depth-first search.

Although the present embodiment has illustrated an example in which a depth-first search is performed, the rule to be used is not limited thereto. Thus, other methods of changing the reference node, such as a breadth-first search, for example, may be adopted.

When the process of setting a splitting value is complete for all of the nodes (S105 YES), a process of storing the generated tree structure model as data is performed (S108), and the process terminates. The data stored herein includes data on the splitting values and the tree structure.

According to such a configuration, a splitting value for each node of the tree structure model is set based on the statistic of each piece of the input sequence data without dependence on data assigned to each node. Thus, tree structure model data with diverse splitting values can be generated.

(1.2.2 Learning process)

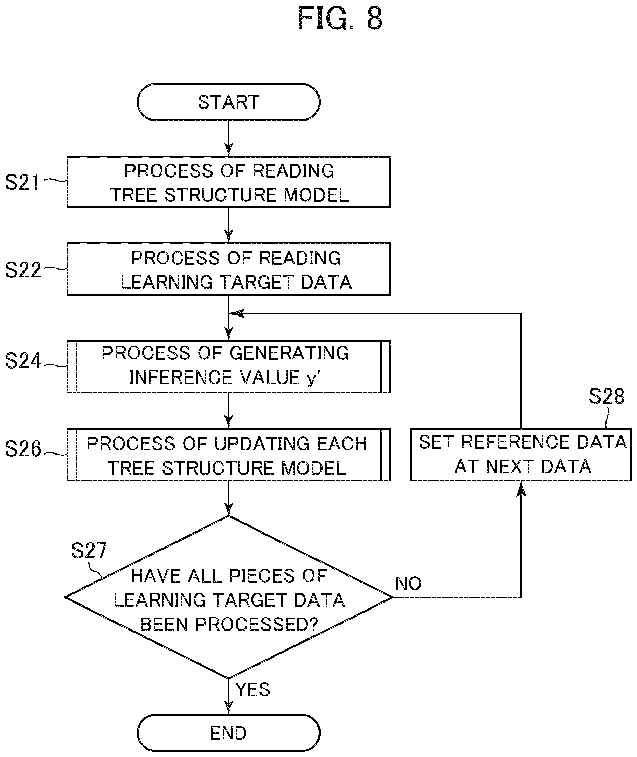

Next, a learning process performed using the generated tree structure model will be described with reference to Figures 8 to 12. It should be noted that the learning process is not limited to the method according to the present embodiment, and other learning process methods may be adopted.

Figure 8 is a general flowchart related to a learning process executed by the learning processing unit 19. As is obvious from Figure 8, once the process is started, a process of reading the tree structure model data together with a learning parameter is performed (S21). In the present embodiment, the learning parameter is a tree structure inference value associated with each leaf node, for example.

Next, a process of reading the learning target data to be used for supervised learning that uses the tree structure model is performed (S22). The learning target data includes one or more pieces of input sequence data and one or more pieces of correct answer sequence data corresponding thereto. In the present embodiment, the learning target data is identical to the data used to generate the tree structure model (for example, see Figure 4). However, the learning target data may be prepared separately from the data used to generate the tree structure model.

After the process of reading the learning target data, a process of causing the tree structure model to sequentially learn the learning target data is performed (S24 to S28).

First, a process of generating an inference value y' is performed using part of the learning target data (S24). In the present embodiment, part of the learning target data corresponds to the input sequence data (X1 to X3) in the same STEP row of the table illustrated in Figure 4.

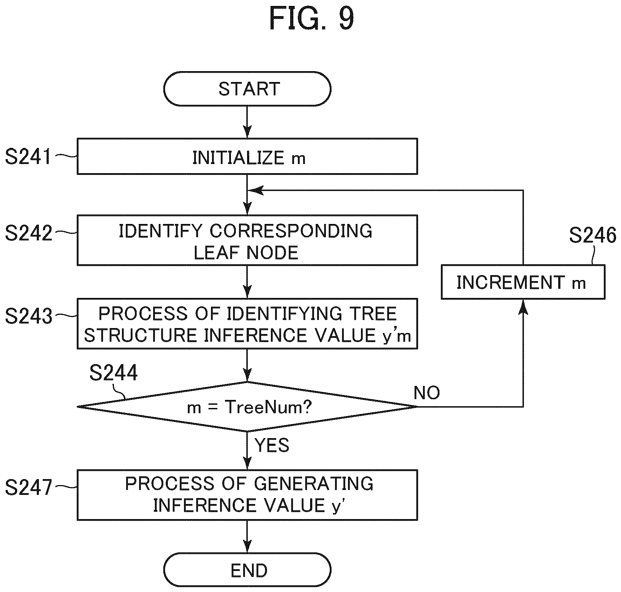

Figure 9 is a detailed flowchart of the inference value generation process (S24) performed in the learning process. As is obvious from Figure 9, once the process is started, a process of initializing a variable m, for example, a process of setting m=1 is performed first (S241). Then, part of the input sequence data, that is, the input sequence data (X1 to X3) in the same STEP row of the table illustrated in Figure 4 in the present embodiment is input to the m-th tree structure so that classification is performed according to the branch condition of each node, and a leaf node corresponding to the classification result is identified (S242).

Then, a tree structure inference value ym', which is a learning parameter associated with each leaf node, is identified (S243). It should be noted that the initial value of the tree structure inference value ym' associated with each leaf node is 0, for example.

The process of identifying the tree structure inference value ym' is repeated for all of the tree structures (TreeNum) while incrementing m by one (S244 NO and S246).

After the tree structure inference values ym' for all of the tree structures are identified (S244 YES), a process of generating an inference value ym' is performed (S247). In the present embodiment, the inference value ym' is generated by calculating the sum of the tree structure inference values ym' of TreeNum as in the following expression. Then, the inference value generation process terminates.

[Expression 1]

$$y' = \sum_{m=1}^{TreeNum} ym'$$

Referring back to Figure 8, when the process of generating the inference value y' is complete, a process of updating each tree structure model is performed (S26).

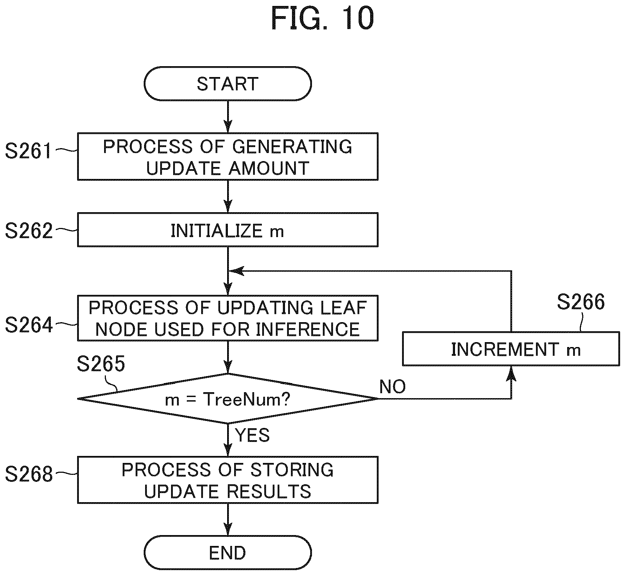

Figure 10 is a detailed flowchart of the process of updating the tree structure model. As is obvious from Figure 10, once the process is started, a process of generating the update amount △y is performed first (S261). The update amount △y is generated by dividing a gradient "ngrad" by the number of tree structure models "Tree-Num" as in the following expression.

[Expression 2]

$$\Delta y = \frac{ngrad}{TreeNum}$$

Herein, the gradient "ngrad" in the present embodiment is defined as a value obtained by multiplying the difference between the correct answer data of the learning target data and the inference value y' by a learning rate η (>0).

[Expression 3]

$$ngrad = \eta\,(y-y')$$

After the calculation of the update amount, a process of initializing the variable m, for example, a process of setting m=1 is performed. Then, a process of applying the update amount to each tree structure model is performed (S264 to S266).

That is, first, for the m-th tree structure model, a process of updating the tree structure inference value ym' related to the leaf node, which has served as the basis for generating the inference value y', is performed using the update amount △y (S264). In the present embodiment, the update process is performed by adding the update amount △y to the tree structure inference value ym'.

The update process is repeatedly executed while incrementing m by one until the tree structure inference value ym' related to the leaf node, which has served as the basis for generating the inference value y', is updated for all of the tree structure models (S265 NO and S266) .

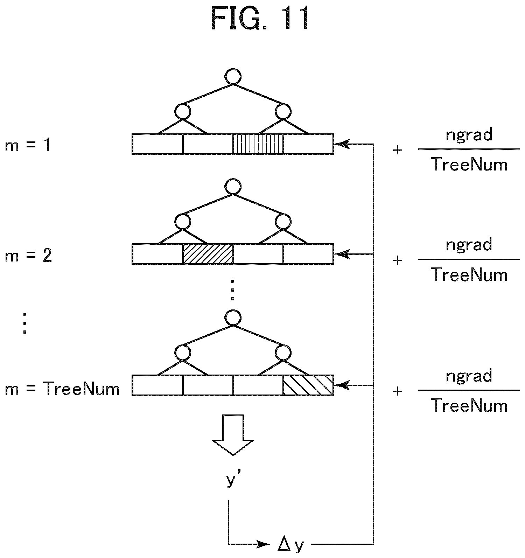

Figure 11 is a conceptual diagram related to the update of each tree structure model. In the example of Figure 11, tree structure models (TreeNum) are displayed by being arranged vertically in a row. Among the leaf nodes of each tree structure model, a leaf node that matches a branch condition identified upon input of predetermined input data is highlighted.

Figure 11 illustrates a series of concepts such that after the inference value y' is generated based on the tree structure inference values ym' associated with the highlighted leaf nodes, the update amount △y is generated based on the inference value y' and the correct answer data y, and then, the tree structure inference value ym' associated with each leaf node is updated based on the update amount △y (=ngrad/TreeNum).

When update of all of the tree structure inference values ym' is complete (S265 YES), a process of storing the tree structure inference values ym' as the update results for all of the tree structure models in the storage unit 11 as learning parameters is performed, and then, the process terminates.

Referring back to Figure 8, when the update process for all of the tree structure models is complete, a process of determining if all pieces of the learning target data have been processed is performed (S27).

If not all pieces of the learning target data have been processed (S27 NO), the reference data is set at the next data of the pieces of the learning target data (S28), and then, a process of generating an inference value y' (S24) and a process of updating each tree structure model (S26) are performed again. It should be noted that the next data of the pieces of the learning target data is data in the next STEP row of the input sequence data, for example.

Meanwhile, if it is determined that all pieces of the learning target data have been processed (S27 YES), the learning process terminates.

According to such a configuration, learning is sequentially performed using a tree structure model with a diverse splitting value that serves as a branch condition for each node. This can increase the potential for appropriately branching the learning target data that is obtained additionally. Therefore, even when sufficient data is not available at a time point of generation of a tree structure model or when the properties of the additionally obtained data have slightly changed due to concept drift or the like, it is possible to provide a machine learning technology that can address such issues.

In addition, since each tree structure model can be updated through a process of adding the update amount, the computational cost required for the learning can be reduced.

Further, since the number of learning parameters used is small, it is possible to implement machine learning while saving memory.

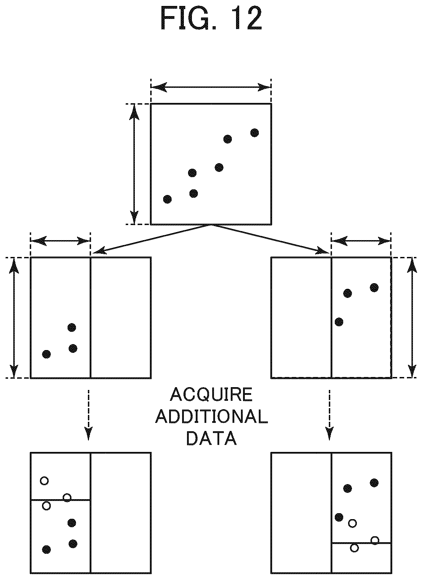

Figure 12 is a conceptual diagram of learning performed using the tree structure model according to the present embodiment. In Figure 12, the conceptual diagram of learning performed using the tree structure according to the present embodiment is illustrated in three stages including the upper, middle, and lower stages.

A quadrangle in the top stage represents a twodimensional space representing the possible range of learning data (indicated by double-headed arrows in Figure 12). In the example of Figure 12, six pieces (i.e., solid points in Figure 12) of learning data have been already learned.

In such a state, when the quadrangle is split at substantially the center in the horizontal direction, the pieces of learning data are divided into three pieces on the right and left sides each as indicated by solid points in the middle stage of Figure 12.

In the present embodiment, a splitting value is determined without dependence on the assigned learning data. Thus, there is no change in the possible range of a splitting value in each of the right and left quadrangles in the middle stage of Figure 12, and the splitting value is determined in the range of the double-headed arrows in Figure 12. Thus, splitting as indicated by a horizontal straight line in each of the quadrangles of the bottom stage can be performed.

In such a state, performing additional learning with the identical tree structure model is considered. When points, such as hollow circles, are newly input through additional learning, the left quadrangle in the lower stage is split by a straight line, which represents a splitting value, into a region including two hollow circles and a region including one hollow circle and three solid circles. Meanwhile, the right quadrangle in the lower stage is split by a straight line, which represents a splitting value, into a region including three solid circles and two hollow circles and a region including one hollow circle.

From Figure 12, it is found that splitting is performed among the newly added hollow circles. Thus, it is possible to grasp that splitting is also appropriately performed among the pieces of the additionally learned data. That is, it is possible to increase the potential for appropriately branching the learning target data that is obtained additionally. Therefore, even when sufficient data is not available at a time point of generation of a tree structure model or when the properties of the additionally obtained data have changed due to concept drift or the like, it is possible to provide a machine learning technology that can address such issues.

(1.2.3 Inference process)

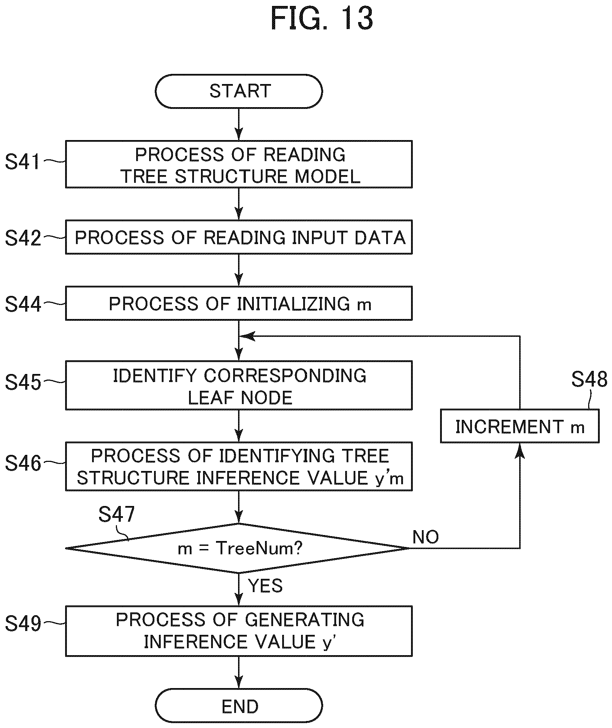

Next, an inference process performed using the learned tree structure model, which has been generated through the learning process, will be described with reference to Figure 13. It should be noted that the inference process is not limited to the method according to the present embodiment, and other inference process methods may be adopted.

Figure 13 is a general flowchart related to an inference process executed by the inference processing unit 20. As is obvious from Figure 13, once the process is started, a process of reading the tree structure model data from the storage unit 11 is executed (S41). At this time, parameters and the like necessary for the inference process, such as parameters and the like obtained through the learning process, are also read.

After the process of reading the tree structure model data, a process of reading input data to serve as the basis for inference is performed (S42). For example, a predetermined unit, such as one step, of all types of the input sequence data (X1 to X3) is read.

Then, a process of initializing the variable m, for example, a process of setting m=1 is executed (S44). After the initialization process, a process of calculating the tree structure inference values ym' for all of the tree structures (TreeNum) is performed (S45 to S48).

That is, a determination process is performed at each node of the m-th tree structure model based on the input data according to the branch condition of each node, and a process of identifying a leaf node to which the input data should belong is performed (S45). Then, a process of identifying the tree structure inference value ym' associated with the leaf node is performed (S46). Such processes (S45 and S46) are repeated for the total number (TreeNum) of tree structures while incrementing m by one (S47 NO and S48).

After the tree structure inference values ym' for all of the tree structures are generated (S47 YES), a process of generating the inference value y' is executed using the tree structure inference values ym' (S49). The inference value y' is calculated as the sum of the tree structure inference values ym' as in the following expression.

[Expression 4]

$$y' = \sum_{m=1}^{TreeNum} ym'$$

After the generation of the inference value y', the process terminates. It should be noted that the generated inference value y' may be handled in any way. For example, the inference value y' may be stored in the storage unit 11, or output to an external device via a predetermined output unit or the like.

It is also possible to perform additional learning by performing a learning process after the inference process.

According to such a configuration, an inference process can be performed on unknown input data.

(2. Second embodiment)

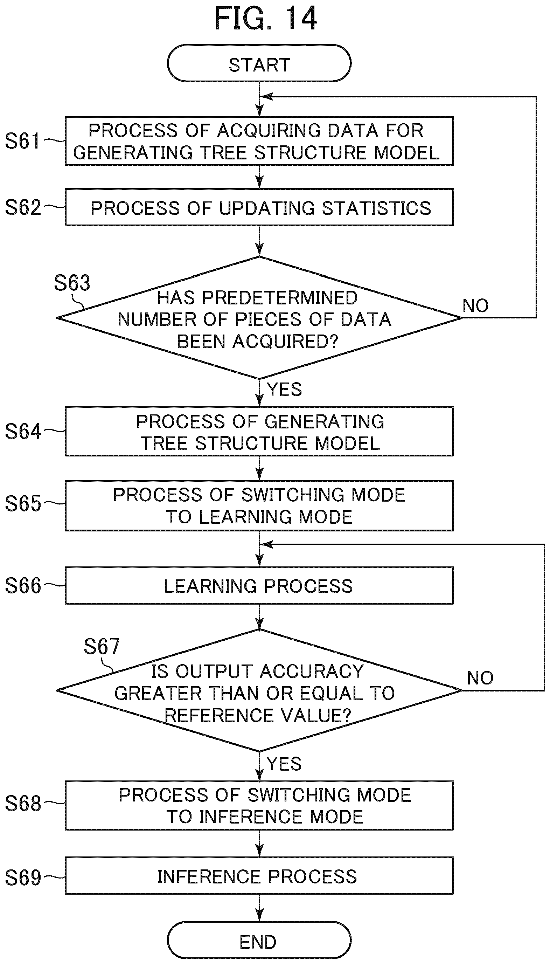

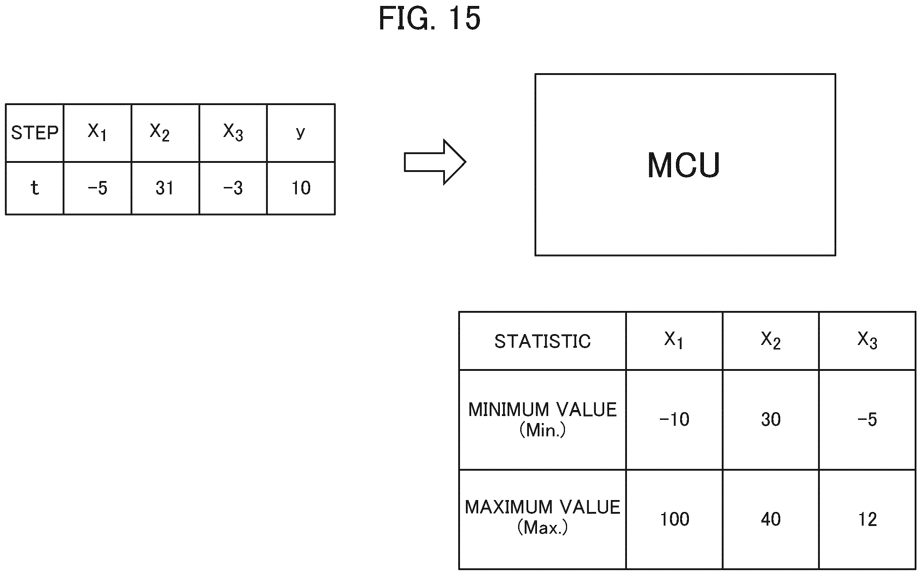

A second embodiment of the present invention will be described with reference to Figures 14 and 15. The second embodiment will describe an example in which a process of generating a tree structure model, a learning process, and an inference process are all executed with a micro controller unit (MCU).

Typically, a micro controller unit is often inferior in processing performance to a PC and the like due to the difference in memory capacity, CPU performance, and the like. Therefore, it is typically difficult to execute with a micro controller unit a process that involves an arithmetic operation by loading a large volume of data into a memory as in machine learning.

However, according to the present invention, it is possible to execute with a micro controller unit all of a process of generating a tree structure model, a learning process, and an inference process.

(2.1 Configuration)

The micro controller unit according to the present embodiment includes a CPU, a memory, an I/O unit, and a peripheral circuit. As in the first embodiment, the CPU implements a tree-structure-model generation processing unit, a learning processing unit, an inference processing unit, and the like.

It should be noted that the micro controller unit can be built into various devices, and is configured to be able to acquire learning target data from a device via the I/O unit or the like and output the results of inference.

(2.2 Operation)

Figure 14 is a general flowchart related to the operation of the micro controller unit. As is obvious from Figure 14, once the process is started, a process of acquiring data for generating a tree structure model is performed (S61). The data for generating a tree structure model herein is a predetermined unit of all types of input data. It should be noted that each of the data for generating a tree structure model, data for a learning process, and data for an inference process is acquired from an external device. Therefore, in the present embodiment, such data is not held on the micro controller unit in advance.

After the process of acquiring data for generating a tree structure model, a process of updating a predetermined statistic, specifically, the maximum value and the minimum value in the present embodiment is performed (S62). That is, if the input data for generating a tree structure model is greater than the current maximum value or less than the current minimum value, the maximum value or the minimum value for each type is updated.

Figure 15 is an explanatory view illustrating the concept of the acquisition of data for generating a tree structure model. In the example, a predetermined unit, that is, one step of all types of the input data (X1 to X3) and the correct answer data (y) are captured into the micro controller unit. It should be noted that the predetermined unit is not limited to one step and may be a plurality of steps.

Then, each piece of the input data (X1 to X3) is compared with the minimum value and the maximum value of each piece of input data held in the micro controller unit. In the example of Figure 15, each piece of the input data is not less than the minimum value or not greater than the maximum value. Thus, an update process is not performed.

Referring back to Figure 14, the process of acquiring data for generating a tree structure model and the process of updating a statistic are repeatedly performed until it is determined that a predetermined number of pieces of data have been acquired (S63 NO). The predetermined number of pieces of data herein is the number that is determined to be sufficient to generate a tree structure model.

If it is determined that a predetermined number of pieces of data have been acquired (S63 YES), a process of generating a tree structure model is performed based on the obtained statistics (S64). The process of generating a tree structure model herein is identical to that according to the first embodiment. Thus, the detailed description thereof is omitted herein (see Figure 6).

According to such a configuration, the statistic is sequentially updated based on the data input per predetermined unit. Thus, there is no need to load a large volume of data into a memory at once, and it is thus possible to generate a tree structure model even with a micro controller unit with a small memory.

After the process of generating the tree structure model, a process of switching mode to a learning mode for performing a learning process is performed (S65). In the learning mode, a learning process is repeated until the accuracy of the inference output becomes greater than or equal to a reference value (S66 and S67 NO).

The learning process of the present embodiment is substantially identical to the learning process of the first embodiment. Thus, the detailed description thereof is omitted herein (see Figure 8). In the present embodiment, the micro controller unit performs a learning process by capturing a predetermined unit, that is, one step of all types of the input data (X1 to X3) and the correct answer data (y). It should be noted that the predetermined unit is not limited to one step, and may be a plurality of steps.

According to such a configuration, learning is sequentially performed based on the data input per predetermined unit, and there is no need to load a large volume of data into a memory at once. Thus, it is possible to perform a learning process even with a micro controller unit with a small memory.

The accuracy of the inference output may be generated using any method, but in the present embodiment, it is generated based on the difference between the inference output (y') and the correct answer data (y), for example.

In the learning mode, if the accuracy of the inference output has become greater than or equal to the reference value (S67 YES), a process of switching mode to an inference mode is performed (S68). After the process of switching mode to the inference mode is performed, an inference process is performed based on predetermined input data (S69).

The inference process of the present embodiment is substantially identical to the inference process of the first embodiment. Thus, the detailed description thereof is omitted herein (see Figure 13). In the present embodiment, the micro controller unit performs an inference process by capturing a predetermined unit, that is, one step of all types of the input data (X1 to X3). It should be noted that the predetermined unit is not limited to one step, and may be a plurality of steps.

When a predetermined termination condition is satisfied in the inference mode, the process terminates. It should be noted that a learning process may be performed again after the inference process.

According to such a configuration, a process of generating a tree structure model as well as a learning process and an inference process, each executed with the generated tree structure model, can be all performed using a micro controller unit with a small memory.

Although the present embodiment has illustrated an example in which a process of generating a tree structure model, a learning process, and an inference process are all executed with a micro controller unit, it is possible to freely determine which process is to be executed with an external device and which process is to be executed with a micro controller unit. Thus, for example, it is possible to execute a process of generating a tree structure model and a learning process with an external information processing device, and mount the obtained learned model on a micro controller unit so that only an inference process is performed with the micro controller unit.

(3. Modified example)

The foregoing embodiment is only exemplary. Thus, various modifications are possible.

Although the foregoing embodiment has described that a splitting value, which is the value of each node of a tree structure is randomly determined based on a statistic, the present invention is not limited to such a configuration. Thus, for example, a splitting value may be determined under a given constrained condition.

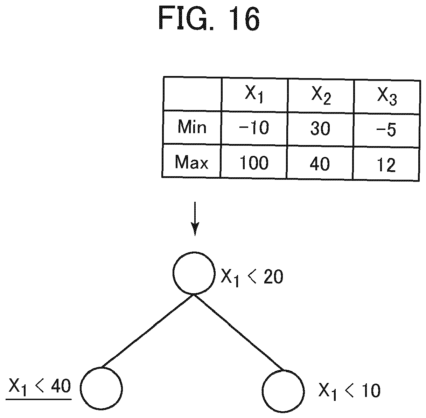

Figure 16 is an explanatory view related to an example of the determination of a splitting value. The middle of Figure 16 illustrates a single parent node with a splitting value of 20 for X1, a left child node with a splitting value of 40 for X1 branching from the parent node, and a right child node with a splitting value of 10 for X1 branching from the parent node.

By the way, since the splitting value of the parent node is 20, only data with X1<20 is assigned to the left child node. Therefore, a condition of X1<40 at the left child node substantially makes no sense as a branch condition, and thus prevents effective branching.

To avoid such a situation, the splitting value of the child node may be determined under a constrained condition for which the branch conditions of the parent node to the upper nodes are taken into consideration. That is, in this example, the left child node may be provided with a constrained condition such that the splitting value for X1 should be determined to be in the range of less than 20. This can implement effective branching.

Although the foregoing embodiment has illustrated the maximum value and the minimum value as examples of the statistic, the present invention is not limited to such a configuration. Thus, other statistics, such as a mean value and a standard deviation, may be used, for example.

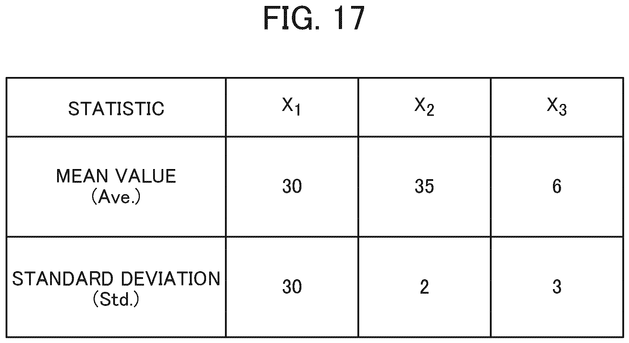

Figure 17 illustrates an example of a table collectively showing a mean value and a standard deviation of each piece of the input sequence data. When a splitting value is set based on such statistical data, a normal distribution random number may be generated based on the mean value and the standard deviation using the Box-Muller's method, for example. According to such a configuration, a splitting value can be randomly set in a state where values around the mean value can be easily selected.

It should be noted that even when a mean value and a standard deviation are used as a statistic, it is possible to acquire data per predetermined unit (for example, per step) to calculate the mean value and the standard deviation.

Although the embodiments of the present invention have been described above, the foregoing embodiments only illustrate some of examples of the application of the present invention, and thus are not intended to limit the technical scope of the present invention to specific configurations of the foregoing embodiments. In addition, the foregoing embodiments may be combined as appropriate unless any contradiction arises.

Industrial Applicability

The present invention is applicable to various industries in which a machine learning technology is used.

Reference Signs List

1    information processing device
10    control unit
11    storage unit
13    input unit
14    display unit
15    audio output unit
16    communication unit
17    I/O unit
18    tree-structure-model generation processing unit
19    learning processing unit
20    inference processing unit

**Claims**

1. An information processing device for generating tree structure model data to be used for machine learning based on data for generating a tree structure model including one or more pieces of input sequence data, comprising:

    a statistic identifying unit that identifies a statistic for each piece of the input sequence data; and

    a tree-structure-model-data generation unit that sets a splitting value for each node of a tree structure model based on the statistic, thereby generating tree structure model data.

2. The information processing device according to claim 1, wherein the statistic is a basic statistic.

3. The information processing device according to claim 1, wherein the statistic includes a maximum value and a minimum value of a numerical value included in each piece of the input sequence data.

4. The information processing device according to claim 3, wherein the tree-structure-model-data generation unit randomly sets a splitting value for each node in a range of the maximum value to the minimum value.

5. The information processing device according to claim 1, wherein the statistic includes a mean value and a standard deviation of a numerical value included in each piece of the input sequence data.

6. The information processing device according to claim 5, wherein the tree-structure-model-data generation unit randomly sets a splitting value for each node in accordance with a standard normal distribution based on the mean value and the standard deviation.

7. The information processing device according to claim 4 or 6, wherein the tree-structure-model-data generation unit sets the splitting value by taking into consideration a splitting value of an upper node.

8. The information processing device according to claim 1, wherein the statistic identifying unit includes

    a per-unit input data acquisition unit that acquires the input sequence data per predetermined unit, and
    a statistic update unit that updates the statistic based on the predetermined unit of the acquired input sequence data.

9. The information processing device according to claim 1, wherein the tree-structure-model-data generation unit generates a plurality of pieces of tree structure model data.

10. A learning processing device that uses the tree structure model data generated by the information processing device according to claim 1, comprising:

    a learning data acquisition unit that acquires learning data, the learning data including one or more pieces of input data and one or more pieces of correct answer data;

an inference output data generation unit that generates inference output data based on each piece of the input data, the tree structure model data, and a parameter associated with the tree structure model data;

an update amount generation unit that generates an update amount based on the inference output data and each piece of the correct answer data; and

a parameter update processing unit that updates the parameter based on the update amount.

11. The learning processing device according to claim 10, wherein the inference output data generation unit identifies the parameter associated with a leaf node of a tree structure model related to the tree structure model data based on each piece of the input data, and generates the inference output data based on the parameter.

12. The learning processing device according to claim 10, wherein the update amount is generated based on a difference between the inference output data and each piece of the correct answer data.

13. The learning processing device according to claim 10, wherein the data for generating the tree structure model and the learning data are identical data.

14. An inference processing device that uses the tree structure model data generated by the information processing device according to claim 1, comprising:

an inference input data acquisition unit that acquires one or more pieces of inference input data; and

an inference output data generation unit that generates inference output data based on each piece of the inference input data, the tree structure model data, and a parameter associated with the tree structure model data.

15. An information processing method for generating tree structure model data to be used for machine learning based on data for generating a tree structure model including one or more pieces of input sequence data, comprising:

a statistic identifying step of identifying a statistic for each piece of the input sequence data; and

a tree-structure-model-data generation step of setting a splitting value for each node of a tree structure model based on the statistic, thereby generating tree structure model data.

16. An information processing program for generating tree structure model data to be used for machine learning based on data for generating a tree structure model including one or more pieces of input sequence data, comprising:

a statistic identifying step of identifying a statistic for each piece of the input sequence data; and

a tree-structure-model-data generation step of setting a splitting value for each node of a tree structure model based on the statistic, thereby generating tree structure model data.

17. A micro controller unit for generating tree structure model data to be used for machine learning based on data for generating a tree structure model including one or more pieces of input sequence data, comprising:

a statistic identifying unit that identifies a statistic for each piece of the input sequence data; and

a tree-structure-model-data generation unit that sets a splitting value for each node of a tree structure model based on the statistic, thereby generating tree structure model data.

# FIG. 1

EP 4 318 334 A1

## FIG. 2

EP 4 318 334 A1

# FIG. 3

```
                    ┌─────────────┐
                    │    START    │
                    └──────┬──────┘
                           │
                           ▼
      ┌───────────────────────────────────────────┐
  S1──│          DATA READING PROCESS              │
      └──────────────────┬────────────────────────┘
                           │
                           ▼
      ┌───────────────────────────────────────────┐
  S2──│         DATA GENERATION PROCESS            │
      │       BASED ON BOOTSTRAP METHOD            │
      └──────────────────┬────────────────────────┘
                           │
                           ▼
      ┌───────────────────────────────────────────┐
  S3──│               INITIALIZE n                 │
      └──────────────────┬────────────────────────┘
```

S1 — DATA READING PROCESS

S2 — DATA GENERATION PROCESS BASED ON BOOTSTRAP METHOD

S3 — INITIALIZE n

S4 — PROCESS OF GENERATING n-TH STATISTICAL DATA AND STORING IT

S7 — INCREMENT n

S5 — n = N?   NO

YES

S8 — INITIALIZE m

S10 — PROCESS OF GENERATING TREE STRUCTURE MODEL

S12 — INCREMENT m

S11 — m = TreeNum?   NO

YES

END

# FIG. 4

| STEP | $X_1$ | $X_2$ | $X_3$ | y |
|---|---|---|---|---|
| 1 | −5 | 31 | −3 | 10 |
| 2 | 8 | 35 | 5 | 15 |
| ⋮ | ⋮ | ⋮ | ⋮ | ⋮ |
| T | 45 | 39 | 12 | 20 |

# FIG. 5

| STATISTIC | $X_1$ | $X_2$ | $X_3$ |
|---|---|---|---|
| MINIMUM VALUE (Min.) | −10 | 30 | −5 |
| MAXIMUM VALUE (Max.) | 100 | 40 | 12 |

# FIG. 6

```
                    ┌─────────────┐
                    │    START    │
                    └─────────────┘
                           │
                           ▼
        ┌──────────────────────────────┐
  S101  │      SET REFERENCE NODE       │
        │         AS ROOT NODE          │◄──────────────────┐
        └──────────────────────────────┘                   │
                           │                                │
                           ▼                                │
        ┌──────────────────────────────┐                   │
  S102  │       RANDOMLY SELECT         │                   │
        │     INPUT SEQUENCE DATA       │         S107      │
        └──────────────────────────────┘                   │
                           │         ┌──────────────────────────────┐
                           ▼         │      SET REFERENCE NODE       │
        ┌──────────────────────────┐ │  AT NEXT NODE BASED ON        │
  S103  │  RANDOMLY SET SPLITTING   │ │    PREDETERMINED RULE         │
        │      VALUE BASED ON       │ └──────────────────────────────┘
        │      STATISTICAL DATA     │                   ▲
        └──────────────────────────┘                    │
                           │                             │
                           ▼                             │
         S105      ╱─────────────────╲        NO         │
              ╱──────  HAVE            ──────────────────┘
              ╲    ALL NODES BEEN      ╱
               ╲    PROCESSED?        ╱
                ╲─────────────────╱
                           │ YES
                           ▼
        ┌──────────────────────────────┐
  S108  │    STORE TREE STRUCTURE       │
        │            DATA               │
        └──────────────────────────────┘
                           │
                           ▼
                    ┌─────────────┐
                    │     END     │
                    └─────────────┘
```

FIG. 7

# FIG. 8

START

S21 — PROCESS OF READING
TREE STRUCTURE MODEL

S22 — PROCESS OF READING
LEARNING TARGET DATA

S24 — PROCESS OF GENERATING
INFERENCE VALUE y'

S26 — PROCESS OF UPDATING EACH
TREE STRUCTURE MODEL

S27 — HAVE ALL PIECES OF
LEARNING TARGET DATA
BEEN PROCESSED?

NO

S28

SET REFERENCE DATA
AT NEXT DATA

YES

END

# FIG. 9

```
                        ┌──────────────┐
                        │    START     │
                        └──────────────┘
                               │
                               ▼
S241 ──┌──────────────────────────────────────┐
       │            INITIALIZE m               │
       └──────────────────────────────────────┘
                               │
                               ▼
S242 ──┌──────────────────────────────────────┐
       │      IDENTIFY CORRESPONDING           │            S246
       │           LEAF NODE                   │               │
       └──────────────────────────────────────┘    ┌──────────────────┐
                               │                    │   INCREMENT m    │
                               ▼                    └──────────────────┘
S243 ──┌──────────────────────────────────────┐
       │    PROCESS OF IDENTIFYING TREE        │
       │ STRUCTURE INFERENCE VALUE y'm         │
       └──────────────────────────────────────┘
          S244               │
             │               ▼
          ◇─────────────────────────────◇    NO
          ◇     m = TreeNum?             ◇──────────
          ◇─────────────────────────────◇
                               │ YES
                               ▼
S247 ──┌──────────────────────────────────────┐
       │     PROCESS OF GENERATING             │
       │      INFERENCE VALUE y'               │
       └──────────────────────────────────────┘
                               │
                               ▼
                        ┌──────────────┐
                        │     END      │
                        └──────────────┘
```

## FIG. 10

START

S261 — PROCESS OF GENERATING UPDATE AMOUNT

S262 — INITIALIZE m

S264 — PROCESS OF UPDATING LEAF NODE USED FOR INFERENCE

S265 — m = TreeNum?

NO → S266 — INCREMENT m

YES

S268 — PROCESS OF STORING UPDATE RESULTS

END

# FIG. 11

$m = 1$      $+ \dfrac{ngrad}{TreeNum}$

$m = 2$      $+ \dfrac{ngrad}{TreeNum}$

$m = TreeNum$      $+ \dfrac{ngrad}{TreeNum}$

$y'$

$\Delta y$

# FIG. 12

ACQUIRE
ADDITIONAL
DATA

# FIG. 13

START

S41 — PROCESS OF READING
TREE STRUCTURE MODEL

S42 — PROCESS OF READING INPUT DATA

S44 — PROCESS OF INITIALIZING m

S45 — IDENTIFY CORRESPONDING
LEAF NODE

S46 — PROCESS OF IDENTIFYING TREE
STRUCTURE INFERENCE VALUE y'$_m$

S48

INCREMENT m

S47

m = TreeNum?      NO

YES

S49 — PROCESS OF GENERATING
INFERENCE VALUE y'

END

# FIG. 14

START

S61 — PROCESS OF ACQUIRING DATA FOR GENERATING TREE STRUCTURE MODEL

S62 — PROCESS OF UPDATING STATISTICS

S63 — HAS PREDETERMINED NUMBER OF PIECES OF DATA BEEN ACQUIRED? — NO

YES

S64 — PROCESS OF GENERATING TREE STRUCTURE MODEL

S65 — PROCESS OF SWITCHING MODE TO LEARNING MODE

S66 — LEARNING PROCESS

S67 — IS OUTPUT ACCURACY GREATER THAN OR EQUAL TO REFERENCE VALUE? — NO

YES

S68 — PROCESS OF SWITCHING MODE TO INFERENCE MODE

S69 — INFERENCE PROCESS

END

# FIG. 15

MCU

| STEP | $X_1$ | $X_2$ | $X_3$ | y |
|------|------|------|------|----|
| t | −5 | 31 | −3 | 10 |

| STATISTIC | $X_1$ | $X_2$ | $X_3$ |
|-----------|------|------|------|
| MINIMUM VALUE (Min.) | −10 | 30 | −5 |
| MAXIMUM VALUE (Max.) | 100 | 40 | 12 |

## FIG. 16

|  | $X_1$ | $X_2$ | $X_3$ |
|---|---|---|---|
| Min | −10 | 30 | −5 |
| Max | 100 | 40 | 12 |

$X_1 < 20$

$X_1 < 40$

$X_1 < 10$

# FIG. 17

| STATISTIC | $X_1$ | $X_2$ | $X_3$ |
|---|---|---|---|
| MEAN VALUE (Ave.) | 30 | 35 | 6 |
| STANDARD DEVIATION (Std.) | 30 | 2 | 3 |

**INTERNATIONAL SEARCH REPORT**

| | International application No. |
|---|---|
| | PCT/JP2021/013982 |

**A. CLASSIFICATION OF SUBJECT MATTER**
G06N 20/00(2019.01)i
FI: G06N20/00

According to International Patent Classification (IPC) or to both national classification and IPC

**B. FIELDS SEARCHED**

Minimum documentation searched (classification system followed by classification symbols)
G06N20/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | 田中 大貴等 , 運転データによる大規模ドライバー識別 , 一般社団法人 人工知能学会 第 32 回全国大会論文集 DVD, 06 July 2018 (accession date), pp. 1-4, pp. 1-4 entire text, (TANAKA, Daiki et al. Large Scale Driver Identification Using Driving Data.), non-official translation (Proceedings DVD of the 32nd Annual Conference of the Japanese Society for Artificial Intelligence) | 1-5, 7-17<br>6 |
| Y | WO 2021/005786 A1 (NIPPON TELEGRAPH & TELEPHONE) 14 January 2021 (2021-01-14) paragraphs [0001]-[0020], fig. 1-3 | 1-5, 7-17 |
| Y | 渋谷 哲朗等 , 情報工学 アルゴリズム , 丸善出版株式会社 , 07 June 2018 (accession date), pp. 51-54, (MARUZEN PUBLISHING CO., LTD.), non-official translation (SHIBUYA, Tetsuo et al. Information engineering Algorithm.) | 4, 7 |

☒ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 June 2021 (11.06.2021) | 22 June 2021 (22.06.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/013982 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | 小渕 幹夫等 , MyFactor: ユーザの内面状態に寄与する因子情報の個人特性に適応的な分析 , 情報処理学会論文誌（ジャーナル）, 16 October 2017 (accession date), vol. 58, no. 10, pp. 1674-1687, pp. 1674-1687, (OBUCHI, Mikio et al. MyFactor: Individual Characteristic Adaptive Estimation of Factor Information Contributing to Human Internal State.), non-official translation (Transactions of Information Processing Society of Japan (Journal)) | 5, 8 |
| Y | JP 6765585 B1 (MITSUBISHI ELECTRIC CORP) 07 October 2020 (2020-10-07) paragraphs [0001]-[0060], fig. 1-4 | 10-13 |

Form PCT/ISA/210 (continuation of second sheet) (January 2015)

**INTERNATIONAL SEARCH REPORT**

Information on patent family members

International application No.

PCT/JP2021/013982

| Patent Documents referred in the Report | Publication Date | Patent Family | Publication Date |
|---|---|---|---|
| WO 2021/005786 A1 | 14 Jan. 2021 | (Family: none) | |
| JP 6765585 B1 | 07 Oct. 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6708847 B